# EUROPEAN PATENT SPECIFICATION

(11) **EP 4 292 849 B1**
(45) Date of publication and mention of the grant of the patent: **05.08.2026**
(21) Application number: 23162098.0
(22) Date of filing: 15.03.2023
(51) Int. Cl.: B60K 1/04, B62D 25/20

(54) **INTEGRATED UNDER BODY PLATFORM ARCHITECTURE OF CTB ELECTRIC VEHICLE AND AUTOMOBILE**
INTEGRIERTE UNTERBAUPLATTFORMARCHITEKTUR FÜR EIN CTB-ELEKTROFAHRZEUG UND AUTOMOBIL DAMIT
ARCHITECTURE DE PLATEFORME SOUS CAISSE INTÉGRÉE DE VÉHICULE ÉLECTRIQUE CTB ET AUTOMOBILE

(30) Priority: 17.06.2022 CN 202210689677
(43) Date of publication of application: 20.12.2023
(73) Proprietor: Deepal Automobile Technology Co., Ltd., Chongqing 401133 (CN)
(72) Inventor: GUO, Wujun, Chongqing, 401133 (CN)
(74) Representative: 2K Patent Partnerschaft mbB

(56) References cited:
- EP-A1- 3 744 547
- WO-A1-2019/185024
- CN-A- 112 793 668
- CN-A- 114 261 268
- DE-A1- 102021 005 515

## Description

### TECHNICAL FIELD

The disclosure relates to automobiles, in particular to an integrated under body platform architecture of CTB electric vehicle and an automobile.

### BACKGROUND

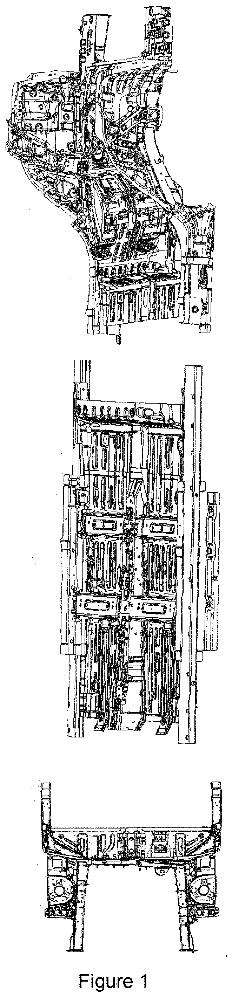

The middle section of the under body of the vehicle is the main carrier of the entire vehicle passenger compartment. Please refer to FIG. 1. The under body of the vehicle in the prior art is assembled by the front engine room assembly, the front floor welding assembly and the rear floor welding assembly. The under body of the vehicle is welded and assembled by about 210 sheet metal stamping parts. The under body of the vehicle and the upper body of the vehicle are welded by traditional resistance spot welding (or CO² shielded welding), and the number of various stamping parts generally reaches about 350. In order to develop a body-in-white assembly, experienced professional body designers are required to accurately grasp the structural layout and division of the body-in-white assembly. At the same time, full analysis and verification of vehicle performance CAE, collision safety, NVH, and four major processes (stamping, welding, painting, and final assembly) are required. The number of developed parts is large and the development cycle is long, which has already caused that it cannot meet the needs of current electric vehicle upgrades and rapid iteration.

Currently, the traditional mounting method of electric vehicle battery structure is to first assemble the battery cells into the module, and then assemble the module into the battery pack (also called pack). Then, a mounting bracket is designed around the battery pack, and the mounting bracket is connected with the under body of the vehicle through bolts. The problem with this traditional battery mounting structure is that the structure of the module housing overlaps with the battery pack, the battery pack overlaps with the structure of the front floor, the seat cross member of the front floor structure and the front beams of the battery pack are similar in structure and function and overlap with each other, and the frame structure of the battery pack overlaps with the frame structure of the under body. These structures are not beneficial to the lightweight of the whole electric vehicles and the rapid iteration of the development process.

At present, in the current battery mounting structure of the electric vehicles (the way the module is assembled into the battery pack, also known as MTP), and the battery pack is assembled by about 70 internal parts and more than 90 standard parts, which may cause problems such as manufacturing precision, sealing, long development cycle, and even safety and is not beneficial to the management and control of development progress and quality.

At the same time, the energy consumption of electric vehicles is strongly related to the wind resistance, and the size of the windward area directly affects the wind resistance. The traditional sheet metal causes problems of low integration and insufficient use of space in the height direction. On the other hand, with the development of the various systems of electric vehicles, there are more and more wires in the whole vehicle, which limits the space inside the sill for traditional wiring, and has higher requirements for the layout of the whole vehicle.

With the increase of the recharge mileage of electric vehicles, the weight of the whole vehicle is constantly rising, and there are serious challenges in meeting the collision safety. For example, for the transmission of the collision capacity between the front longitudinal member and the front floor sill beam, the structure between the two needs to be strengthened. However, when the traditional sheet metal structure achieves such performance, the under body of the vehicle will be heavier.

For the front floor welding assembly, in terms of the performance of the side pillars and NTF of the traditional sheet metal structure, due to the characteristics of the sheet metal structure, in order to achieve the development goal, CAE analysis and optimization must be repeated, and even there is still a problem of insufficient performance.

For the rear floor welding assembly, the traditional sheet metal structure is limited by the thickness of the sheet metal material in terms of torsional stiffness and NTF performance. To achieve the goal requires repeated analysis and research, and even there is still a problem of insufficient performance.

CN114261268A discloses a new energy vehicle body and battery pack integrated structure which comprises a lower vehicle body, a battery mounting cavity is integrally formed in the lower vehicle body, a front cabin assembly is arranged on the front portion of the battery mounting cavity, a rear floor assembly is arranged on the rear portion of the battery mounting cavity, and a left threshold and a right threshold are arranged on the two sides of the battery mounting cavity respectively. A bottom plate assembly is arranged at the bottom of the battery mounting cavity, and an upper cover assembly is arranged at the upper end of the battery mounting cavity; the side faces of the left threshold, the right threshold, the front cabin assembly rear structure and the rear floor front structure are each provided with a sealing face structure, the sealing face structures corresponding to the left threshold, the right threshold, the front cabin assembly rear structure and the rear floor front structure are arranged in a continuous contact mode, and the continuous sealing face structures surround the battery installation cavity by a circle to form a circle of horizontal sealing face. And a sealing rubber strip is arranged between the upper cover plate and the horizontal sealing surface.

CN112793668A discloses an electric vehicle lower vehicle body frame, which comprises a front cabin assembly, a front floor assembly and a rear floor assembly. The front floor assembly comprises a battery mounting frame, a front floor panel and a battery tray; the battery mounting frame comprises two doorsill beams and two first cross beams; the two ends of the doorsill beams are fixedly connected with the front cabin assembly and the rear floor assembly respectively, the two doorsill beams are fixedly connected through the two first cross beams, the doorsill beams are of a hollow structure, the doorsill beams are arranged to be of an anti-collision structure, and when the doorsill beams are collided, the side collision force is transmitted to the front cabin assembly and the rear floor assembly.

DE102021005515A1 discloses a vehicle with a drive battery, wherein a plurality of longitudinal supports and a plurality of cross supports are arranged in a receiving space for battery modules of the drive battery, and wherein the receiving space is sealed to the outside by a battery cover. The longitudinal beams in the receiving space for the battery modules are arranged adjacent to the longitudinal beams at least in a front region of a bodyshell.

### SUMMARY

The disclosure provides an integrated under body platform architecture of CTB electric vehicle and an automobile to alleviate or eliminate at least one of the above-mentioned technical problems.

According to the present disclosure, this problem is solved by an integrated under body platform architecture of a CTB electric vehicle as claimed in claim 1, and by an automobile as claimed in claim 7. Further advantageous embodiments are the subject-matter of the depend claims.

The disclosure realizes a platformization of the under body, reduces the number of parts of the under body, shorten a development cycle, reduce a development cost. It is also beneficial to a rapid iteration of products and realizes a lightweight of the under body, ensures a sufficient rigidity and strength of the under body, and improves a sealing performance of a power battery compartment.

### BRIEF DESCRIPTION OF THE DRAWINGS

FIG. 1 is the schematic structural view of an under body of a conventional vehicle described in the background.
FIG. 2 is a schematic structural view of an integrated under body platform architecture of CTB electric vehicle in a specific embodiment of the disclosure.
FIG. 3 is an exploded view of the integrated under body platform architecture of the CTB electric vehicle in a specific embodiment.
FIG. 4 is a cross-sectional view of A-A in FIG. 2.

### PART NUMBER DESCRIPTION

1-front unit, 2-middle unit, 3-rear unit, 4-cover unit, 5-sealing ring, 6-battery cell, 7-supporting bolt, 8-nut;
101-front cross member, 102-front shock tower, 103-engine room side beam, 104-front shock absorber mounting part;
201-sill side beam, 202-power battery housing groove, 203-bottom wall, 204-side wall, 205-sealing surface, 206-bolt mounting base, 207-pipeline arrangement passage, 208-first connecting part;
301-rear floor, 302-rear shock tower, 303-rear longitudinal member, 304-second connecting part;
401-cover, 402-seat cross member, 403-middle longitudinal member.

### DETAILED DESCRIPTION

The disclosure will be further described below combined with accompanying drawings.

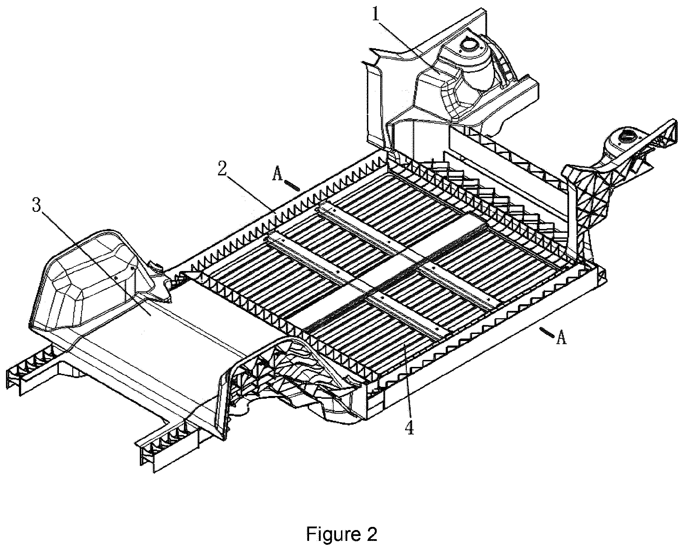

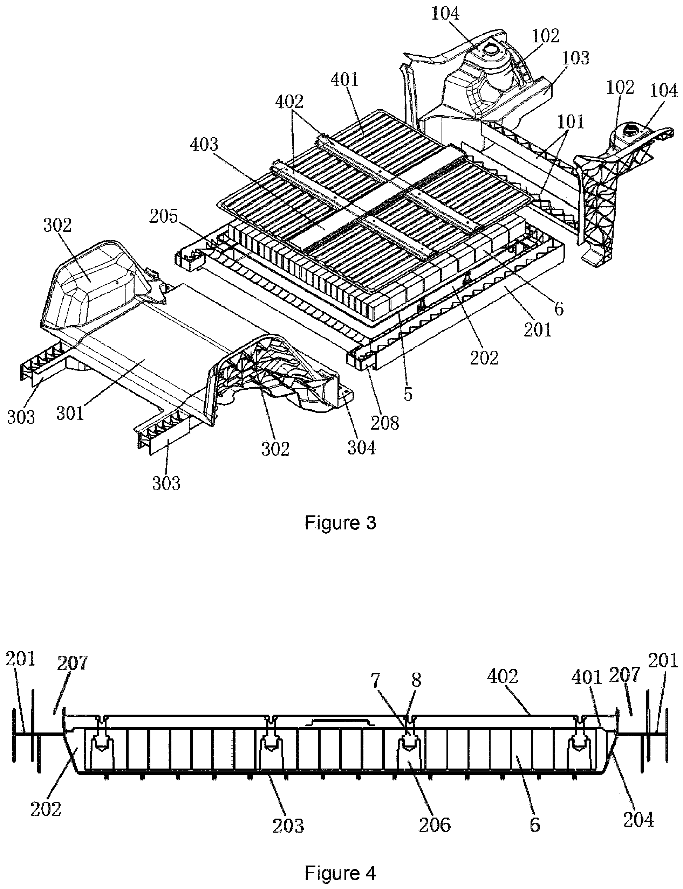

Please refer to FIG. 2 through FIG. 4. The disclosure provides an integrated under body platform architecture of CTB (Cell to board) electric vehicle. The integrated under body platform architecture includes a front unit 1, a middle unit 2 and a rear unit 3 connected sequentially. The middle unit 2 includes two sill side beams 201 and a power battery housing groove 202 between the two sill side beams 201. The power battery housing groove 202 can house multiple sets of battery cells 6. At least one unit of the front unit 1, the middle unit 2 and the rear unit 3 is an integral casting structure. With the above structure, a one-piece casting structure is beneficial to a platformization of the under body, which can reduce the number of parts of the under body, shorten a development cycle, reduce a development cost. It is also beneficial to a rapid iteration of products, improve an efficiency of assembly and ensure a sufficient rigidity and strength of the under body, which is beneficial to an improvement of a driving comfort of a whole vehicle.

In some embodiments, all of the front unit 1, the middle unit 2 and the rear unit 3 are integral casting structures.

Specifically, the front unit 1 is fixedly connected with the two sill side beams 201 through a fastener, and a gap between the front unit 1 and the middle unit 2 is sealed with a sealant. The front unit 1 and the middle unit 2 are connected by the fastener, which can realize a quick adjustment of a hard point of a chassis mounting and is beneficial to realize a platformization of the under body. The front unit 1 and the middle unit 2 adopt the integral casting structure, which can reduce a sealing difficulty of the under body and improve an airtightness of a vehicle body and a whole vehicle. As a specific embodiment, rear ends of the two engine room side beams 103 of the front unit 1 are fixedly connected with front ends of the two sill side beams 201 by bolts respectively. In a case that the front unit 1 and the middle unit 2 both adopt an integral casting structure, a collision force can be better transmitted between the engine room side beam 103 and the sill side beam 201.

Specifically, the rear unit 3 is fixedly connected with the two sill side beams 201 through the fastener, and a gap between the rear unit 3 and the middle unit 2 is sealed with the sealant. The rear unit 3 and the middle unit 2 are connected by the fastener, which can realize the quick adjustment of the hard point of the chassis mounting and is beneficial to realize the platformization of the under body. The rear unit 3 and the middle unit 2 adopt the integral casting structure, which can reduce the sealing difficulty of the under body and improve the airtightness of the vehicle body and the whole vehicle. As a specific embodiment, front ends of the two rear longitudinal members 303 of the rear unit 3 are fixedly connected with rear ends of the two sill side beams 201 by the bolts respectively. In a case that the rear unit 3 and the middle unit 2 both adopt the integral casting structure, the rear longitudinal beam 303 and the sill side beam 201 can better realize a connection, and the collision force can be better transmitted between the rear longitudinal beam 303 and the sill side beam 201. As a specific embodiment, an upper part of the rear end of the sill side beam 201 is provided with a first connecting part 208 protruding backward, a lower part of the front end of the rear longitudinal beam 303 is provided with a second connecting part 304 protruding forward, and the first connecting part 208 and the second connecting part 304 are stacked and fastened together by the bolts.

In some embodiments, the front unit 1 includes a front cross member 101, two engine room side beams 103 and two front shock towers 102, two ends of the front cross member 101 are respectively connected with the two engine room side beams 103, and the two front shock towers 102 are connected with two engine room side beams 103 respectively. In some embodiments, the front unit 1 is an aluminum alloy die-casting part that is integrally cast. A use of aluminum alloy die-casting parts is beneficial to a lightweight of the front unit 1, and can reduce a weight by more than 10% compared with the conventional sheet metal solution. At the same time, the use of aluminum alloy die-casting parts can further ensure that the front unit 1 has sufficient rigidity.

In some embodiments, tops of the two front shock towers 102 are all provided with a front shock absorber mounting part 104, and the two front shock absorber mounting parts 104 are all provided with machined shock absorber mounting holes. Since the front unit 1 is an aluminum alloy die-casting part, the shock absorber mounting holes can be processed by machining, for example, by CNC machine tools. In order to adapt to a change of a front wheelbase of different models of a platform model, a hole distance of a left and right shock absorber mounting holes may be changed to correspond to the change of the front wheelbase. A changing process is very simple, and it is beneficial to improve a position accuracy of the shock absorber mounting holes.

In some embodiments, the rear unit 3 includes a rear floor 301, two rear longitudinal members 303 and two rear shock towers 302. The two rear longitudinal members 303 are both connected with the rear floor 301, and the two rear shock towers 302 are respectively connected with the two rear longitudinal members 303. In some embodiments, the rear unit 3 is an aluminum alloy die-casting part that is integrally cast. The use of aluminum alloy die-casting parts is beneficial to a lightweight of the rear unit 3, and can reduce a weight by more than 10% compared with the conventional sheet metal solution. At the same time, the use of aluminum alloy die-casting parts can further ensure that the rear unit 3 has sufficient rigidity. A thickness of the aluminum alloy die-casting parts is between 2.5mm to 6.0mm, which can ensure a torsional rigidity and NTF (Noise Transfer Function) performance of the rear unit 3.

In some embodiments, the integrated under body platform architecture of the CTB electric vehicle further includes a cover unit 4 fixedly connected with the middle unit 2, and the cover unit 4 closes a notch of the power battery housing groove 202. The cover unit 4 and the power battery housing groove 202 enclose to form a power battery compartment for housing a power battery.

In some embodiments, the middle unit 2 is an integral casting structure. A sealing surface 205 processed mechanically is arranged at the notch of the power battery housing groove 202, the sealing surface 205 is arranged around the notch of the power battery housing groove 202, and a seal is formed between the cover unit 4 and the sealing surface 205. Since the middle unit 2 adopts an integral casting structure, the sealing surface 205 may be processed by machining, for example, the sealing surface 205 with high precision may be milled on the middle unit 2. The sealing surface 205 may be processed by a CNC machine tool, and the sealing surface 205 with high precision can improve an airtightness of the power battery compartment. In a case that the cover unit 4 is fastened to the middle unit 2 by bolts and a sealing ring 5 or a sealant is arranged between the cover unit 4 and the sealing surface 205, the sealing surface 205 processed by the above-mentioned machining method can ensure the airtightness of the power battery compartment IP67 and above.

During a specific embodiment, in order to ensure the airtightness of the power battery compartment, the sealing ring 5 or the sealant is arranged between the cover unit 4 and the sealing surface 205, and a sealing ring mounting groove for coupling the sealing ring 5 is formed on the sealing surface 205 by machining.

In some embodiments, the notch of the power battery housing groove 202 is arranged upwards. The middle unit 2 is provided with an annular supporting surface facing upwards, and the annular supporting surface is arranged around the notch of the power battery housing groove 202. The annular supporting surface is provided with a cover connecting hole, and the sealing surface 205 is arranged on the annular supporting surface.

In some embodiments, the cover unit 4 includes a cover 401 that closes the notch of the power battery housing groove 202 and a seat cross member 402 that is fixedly connected with the cover 401 by welding. The cover 401 is supported on the annular supporting surface and is tightly connected with the annular supporting surface by bolts that are threadedly matched with the cover connecting hole. A supporting member for supporting the seat cross member 402 upwards is arranged in the power battery housing groove 202. Using the above solution, the cover 401 is used to close the power battery compartment on one hand, and on the other hand, the cover 401 is also used as a floor of a passenger compartment. An arrangement of the supporting member can strengthen a support for the seat cross member 402, improve a stability of the power battery compartment, increase a strength and rigidity of the seat cross member 402, reduce requirements for the cover 401 and the seat cross member 402, and be beneficial to a realization of the lightweight of the cover unit 4. The cover unit 4 may be assembled by a conventional sheet metal welding assembly structure, which may save a pair of aluminum alloy die-casting parts before a development of the structure.

During a specific embodiment, a lower end of the supporting member is connected with a bottom wall 203 of the power battery housing groove 202, and an upper end of the supporting member is connected with the seat cross member 402 through the cover 401. Specifically, the seat cross member 402 is a U-shaped cross member, and a nut 8 is welded in the seat cross member 402. A bolt mounting base 206 protruding upwardly is arranged on the bottom wall 203 of the power battery housing groove 202. The supporting member is a supporting bolt 7 whose lower end is connected with the bolt mounting seat 206 and whose upper end is connected with the nut 8, and the supporting bolt 7 may be a stud bolt. In some embodiments, two ends of the seat cross member 402 and the middle unit 2 are fixedly connected by means of FDS. In other embodiments, other fixed connection methods may also be selected. In a specific embodiment, a plurality of supporting members may be arranged corresponding to each seat cross member 402, for example, four supporting members.

In some embodiments, the cover unit 4 further includes a middle longitudinal member 403 fixedly connected with the cover 401. The middle longitudinal member 403 can support some control unit of the whole vehicle, for example, provide support for a safety controller. The middle longitudinal member 403 can also improve a rigidity and strength of the cover unit 4.

In some embodiments, the middle unit 2 is an aluminum alloy die-casting part that is integrally cast. The use of aluminum alloy die-casting part is beneficial to a lightweight of the middle unit 2, which can reduce the weight by more than 10% compared with the conventional sheet metal solution. At the same time, the use of aluminum alloy die-casting part can further ensure that the middle unit 2 has sufficient rigidity. A thickness of the aluminum alloy die-casting parts is between 2.5mm to 6.0mm, which can ensure a side pillar impact and NTF performance of the middle unit 2.

In some embodiments, the middle unit 2 further includes two middle unit cross members. One middle unit cross member is connected between the front ends of the two sill side beams 201, and another middle unit cross member is connected between the rear ends of the two sill side beams 201. An arrangement of the middle unit cross members can improve a structural strength of the middle unit 2 and can also strengthen a protection of the power battery compartment.

In some embodiments, the two sill side beams 201 are provided with a pipeline arrangement passage 207 extending along front and rear directions. Since the middle unit 2 is an aluminum alloy die-casting part, it is convenient to arrange the pipeline arrangement passage 207 on the sill side beam 201, which can reduce a restriction on an arrangement of automobile pipelines. Further, the pipeline arrangement passage 207 may also be arranged on other cross members or longitudinal members on the front unit 1, the middle unit 2 and the rear unit 3.

In some embodiments, the power battery housing groove 202 is a groove-shaped structure surrounded by the bottom wall 203 and a side wall 204. The bottom wall 203 of the power battery housing groove 202 is provided with a cooling plate bonding part, and the front and rear ends of the power battery housing groove 202 are respectively designed with an inlet and outlet pipeline mounting structure of cooling liquid and a high-voltage wire mounting structure.

In a specific embodiment, the aluminum alloy die-casting part may be made by a high vacuum die casting process. In other embodiments, other lightweight material alloys may also be used to cast the front unit 1, the middle unit 2 and the rear unit 3.

The disclosure further provides an automobile which includes any of the integrated under body platform architecture of the CTB electric vehicle mentioned above.

A traditional design of the under body in the conventional art is mainly based on sheet metal stamping and welding parts. The disclosure mainly adopts three-stage high vacuum die-casting parts. The front unit 1 may adapt to different wheelbases and different vehicle weights. Since the front unit 1 is an aluminum alloy die-casting part, enough space can be reserved on a front side of the front unit 1 to ensure a design change of a front end energy-absorbing collision structure. While the front unit 1 does not need to be greatly adjusted to ensure a realization of a platfromization structure of a front engine room.

The middle unit 2 adopts an integration of a passenger compartment floor, the sill side beams 201 and the power battery housing groove 202 into one die-casting structural unit, which has a good weight reduction effect and optimization effect of a whole value chain cost. Compared with the traditional sheet metal solution, the weight is reduced by more than 10%. In a development of models on the same platform, it is only necessary to adjust a structure of the middle unit 2 tightly to adapt to different models, which shortens the development cycle and development costs, and facilitating rapid iteration of products.

Since the middle unit 2 is an aluminum alloy die-casting part, the cover unit 4 is connected with the sealing surface 205 formed by machining on a die-casting unit by a plurality of bolts. The sealing ring 5 is arranged between the cover unit 4 and the sealing surface 205, which can improve a sealing performance of a battery system and improve a safety performance.

Through a reasonable arrangement of the supporting members, a flexibility of a seat space layout is improved, a passenger compartment space layout is convenient, and a distance from the ground of the vehicle is improved.

The front unit 1, the middle unit 2 and the rear unit 3 are all aluminum alloy die-casting parts. Die-casting integration reduces the number of parts and improves the lightweight effect. If multiple vehicle models are developed on the same platform, it can easily adapt to changes in vehicle length and width. Due to characteristics and process performances of the aluminum alloy die-casting parts, it can ensure that the under body and body have sufficient rigidity and strength.

The front unit 1, the middle unit 2 and the rear unit 3 are all aluminum alloy die-casting parts, which is beneficial to ensure advantages of equipment, process and process manufacturing cost.

## Claims

1. An integrated under body platform architecture of a cell-to-body, CTB, electric vehicle, comprising a front unit (1), a middle unit (2), a rear unit (3), wherein the middle unit (2) comprises two sill side beams (201) and a power battery housing groove (202) between the two sill side beams (201), at least one of the front unit (1), the middle unit (2) and the rear unit (3) is an integral casting structure; **characterized by**
further comprising a cover unit (4);
wherein the front unit (1), the middle unit (2) and the rear unit (3) are all integral casting structure;
wherein the front unit (1) is fixedly connected with the two sill side beams (201) through a fastener, and a gap between the front unit (1) and the middle unit (2) is sealed with a sealant;
wherein the rear unit (3) is fixedly connected with the two sill side beams (201) through a fastener, and a gap between the rear unit (1) and the middle unit (2) is sealed with a sealant;
and wherein:
the cover unit (4) is fixedly connected with the middle unit (2), wherein the cover unit (4) closes a notch of the power battery housing groove (202), and the cover unit (4) and the power battery housing groove (202) enclose a power battery compartment to house a power battery;
the middle unit (2) has an integrated casting structure, the notch of the power battery housing groove (202) is provided with a sealing surface (205) processed mechanically, the sealing surface (205) is arranged around the notch of the power battery housing groove (202), and a seal is formed between the cover unit (4) and the sealing surface (205);
a sealing ring or sealant is arranged between the cover unit (4) and the sealing surface (205);
the cover unit (4) comprises a cover (401) that closes the notch of the power battery housing groove (202) and a seat cross member (402) fixedly connected with the cover (401), the notch of the power battery housing groove (202) is arranged upward, and a supporting member to support the seat cross member (402) upward is arranged in the power battery housing groove (202); and
an lower end of the supporting member is connected with a bottom wall (203) of the power battery housing groove (202), and an upper end of the supporting member is connected with the seat cross member (402) through the cover (401).

2. The integrated under body platform architecture of the CTB electric vehicle according to claim 1 wherein
the front unit (1) comprises a front cross member (101), two engine room side beams (103) and two front shock towers (102), two ends of the front cross member are respectively connected with the two engine room side beams, and the two front shock towers are connected with the two engine room side beams respectively.

3. The integrated under body platform architecture of the CTB electric vehicle according to claim 2, wherein
both tops of the two front shock towers (102) are provided with a machined front shock absorber mounting hole.

4. The integrated under body platform architecture of the CTB electric vehicle according to any one of claims 1 to 3, wherein
the rear unit (3) comprises a rear floor (301), two rear longitudinal members (303) and two rear shock towers (302), the two rear longitudinal members are connected with the rear floor, and the two rear shock towers are respectively connected with the two rear longitudinal members.

5. The integrated under body platform architecture of the CTB electric vehicle according to any one of claims 1 to 4, wherein
the front unit (1) is an aluminum alloy die-casting part that is integrally cast, the middle unit (2) is an aluminum alloy die-casting part that is integrally cast, and the rear unit (3) is an integrally cast aluminum alloy die-casting part.

6. The integrated under body platform architecture of the CTB electric vehicle according to any one of claims 1 to 5, wherein
the middle unit (2) further comprises two middle unit cross members, one of the middle unit cross member is connected between front ends of the two sill side beams, and the other middle unit cross member is connected between rear ends of the two sill side beams.

7. An automobile, comprising the integrated under body platform architecture of CTB electric vehicle according to any one of claim 1 to claim 6.

## Patentansprüche

1. Integrierte Unterbodenplattformarchitektur eines Cell-to-Body-, CTB-, Elektrofahrzeugs, umfassend eine Vordereinheit (1), eine Mitteleinheit (2) und eine Hintereinheit (3), wobei die Mitteleinheit (2) zwei Schwellerseitenträger (201) und eine zwischen den zwei Schwellerseitenträger (201) angeordnete Antriebsbatterie-Aufnahmenut (202) umfasst, wobei mindestens eine der Vordereinheit (1), der Mitteleinheit (2) und der Hintereinheit (3) einstückige Gussstruktur ist, **dadurch gekennzeichnet, dass**
sie ferner eine Abdeckeinheit (4) umfasst;
wobei die Vordereinheit (1), die Mitteleinheit (2) und die Hintereinheit (3) sämtlich einstückige Gussstrukturen sind;
wobei die Vordereinheit (1) fest mit den beiden Schwellerseitenträgern (201) durch ein Befestigungselement verbunden ist und ein Spalt zwischen der Vordereinheit (1) und der Mitteleinheit (2) mit einem Dichtmittel abgedichtet ist;
wobei die Hintereinheit (3) fest mit den beiden Schwellerseitenträgern (201) durch ein Befestigungselement verbunden ist und ein Spalt zwischen der Hintereinheit (3) und der Mitteleinheit (2) mit einem Dichtmittel abgedichtet ist;
und wobei:
die Abdeckeinheit (4) fest mit der Mitteleinheit (2) verbunden ist, wobei die Abdeckeinheit (4) eine Aussparung der Antriebsbatterie-Aufnahmenut (202) verschließt, und die Abdeckeinheit (4) und die Antriebsbatterie-Aufnahmenut (202) ein Antriebsbatteriefach zur Aufnahme einer Antriebsbatterie umschließen;
die Mitteleinheit (2) eine einstückige Gussstruktur aufweist, die Aussparung der Antriebsbatterie-Aufnahmenut (202) mit einer mechanisch bearbeiteten Dichtfläche (205) versehen ist, die Dichtfläche (205) um die Aussparung der Antriebsbatterie-Aufnahmenut (202) herum angeordnet ist, und zwischen der Abdeckeinheit (4) und der Dichtfläche (205) eine Abdichtung gebildet wird;
ein Dichtring oder Dichtmittel zwischen der Abdeckeinheit (4) und der Dichtfläche (205) angeordnet ist;
die Abdeckeinheit (4) eine Abdeckung (401), die die Aussparung der Antriebsbatterie-Aufnahmenut (202) verschließt, und einen mit der Abdeckung (401) fest verbundenen Sitzquerträger (402) umfasst, die Aussparung der Antriebsbatterie-Aufnahmenut (202) nach oben gerichtet angeordnet ist und in der Antriebsbatterie-Aufnahmenut (202) ein Stützelement zum nach oben gerichteten Abstützen des Sitzquerträgers (402) angeordnet ist;
ein unteres Ende des Stützelements mit einer Bodenwand (203) der Antriebsbatterie-Aufnahmenut (202) verbunden ist, und ein oberes Ende des Stützelements über die Abdeckung (401) mit dem Sitzquerträger (402) verbunden ist.

2. Integrierte Unterbodenplattformarchitektur eines CTB-Elektrofahrzeugs nach Anspruch 1, wobei
die Vordereinheit (1) einen Frontquerträger (101), zwei Motorraum-Seitenträger (103) und zwei vordere Stoßdämpferdome (102) umfasst; beide Enden des Frontquerträgers jeweils mit den beiden Motorraum-Seitenträgern verbunden sind, und die beiden vorderen Stoßdämpferdome jeweils mit den beiden Motorraum-Seitenträgern verbunden sind.

3. Integrierte Unterbodenplattformarchitektur eines CTB-Elektrofahrzeugs nach Anspruch 2, wobei
die beiden Oberseiten der beiden vorderen Stoßdämpferdome (102) mit einem mechanisch bearbeiteten vorderen Stoßdämpfer-Befestigungsloch versehen sind.

4. Integrierte Unterbodenplattformarchitektur eines CTB-Elektrofahrzeugs nach einem der Ansprüche 1 bis 3, wobei
die Hintereinheit (3) einen Hinterboden (301), zwei Hinterlängsträger (303) und zwei hintere Stoßdämpferdome (302) umfasst, wobei die beiden Hinterlängsträger mit dem Hinterboden verbunden sind und die beiden hinteren Stoßdämpferdome jeweils mit den beiden Hinterlängsträgern verbunden sind.

5. Integrierte Unterbodenplattformarchitektur eines CTB-Elektrofahrzeugs nach einem der Ansprüche 1 bis 4, wobei
die Vordereinheit (1) ein einstückig gegossenes Aluminiumlegierungs-Druckgussteil ist, die Mitteleinheit (2) ein einstückig gegossenes Aluminiumlegierungs-Druckgussteil ist, und die Hintereinheit (3) ein einstückig gegossenes Aluminiumlegierungs-Druckgussteil ist.

6. Die integrierte Unterbodenplattformarchitektur des CTB-Elektrofahrzeugs nach einem der Ansprüche 1 bis 5, wobei
die Mitteleinheit (2) weiterhin zwei Mitteleinheits-Querträger umfasst, wobei eine der Mitteleinheits-Querträger zwischen den vorderen Enden der beiden Schwellerseitenträger verbunden ist und der andere Mitteleinheits-Querträger zwischen den hinteren Enden der beiden Schwellerseitenträger verbunden ist.

7. Kraftfahrzeug, umfassend die integrierte Unterbodenplattformarchitektur des CTB-Elektrofahrzeugs nach einem der Ansprüche 1 bis 6.

## Revendications

1. Architecture de plateforme de soubassement intégrée d'un véhicule électrique à cellule à carrosserie, CTB, comprenant une unité avant (1), une unité centrale (2), une unité arrière (3), dans laquelle
l'unité centrale (2) comprend deux longerons de bas de caisse (201) et une rainure de logement de batterie d'alimentation (202) entre les deux longerons de bas de caisse (201), au moins l'une de l'unité avant (1), de l'unité centrale (2) et de l'unité arrière (3) est une structure de coulée intégrale ; **caractérisée en ce qu'elle**
comprend en outre une unité de couvercle (4) ;
dans laquelle l'unité avant (1), l'unité centrale (2) et l'unité arrière (3) sont toutes une structure de coulée intégrale ;
dans laquelle l'unité avant (1) est reliée de manière fixe aux deux longerons de bas de caisse (201) par l'intermédiaire d'un élément de fixation, et un espace entre l'unité avant (1) et l'unité centrale (2) est scellé avec un mastic d'étanchéité ;
dans laquelle l'unité arrière (3) est reliée de manière fixe aux deux longerons de bas de caisse (201) par l'intermédiaire d'un élément de fixation, et un espace entre l'unité arrière (1) et l'unité centrale (2) est scellé avec un mastic d'étanchéité ;
et dans laquelle :
l'unité de couvercle (4) est reliée de manière fixe à l'unité centrale (2), dans laquelle l'unité de couvercle (4) ferme une encoche de la rainure de logement de batterie d'alimentation (202), et l'unité de couvercle (4) et la rainure de logement de batterie d'alimentation (202) délimitent un compartiment de batterie d'alimentation pour loger une batterie d'alimentation ;
l'unité centrale (2) présente une structure de coulée intégrée, l'encoche de la rainure de logement de batterie d'alimentation (202) est pourvue d'une surface d'étanchéité (205) traitée mécaniquement, la surface d'étanchéité (205) est agencée autour de l'encoche de la rainure de logement de batterie d'alimentation (202), et un joint d'étanchéité est formé entre l'unité de couvercle (4) et la surface d'étanchéité (205) ;
une bague d'étanchéité ou un mastic d'étanchéité est agencé entre l'unité de couvercle (4) et la surface d'étanchéité (205) ;
l'unité de couvercle (4) comprend un couvercle (401) qui ferme l'encoche de la rainure de logement de batterie d'alimentation (202) et une traverse de siège (402) reliée de manière fixe au couvercle (401), l'encoche de la rainure de logement de batterie d'alimentation (202) est agencée vers le haut, et un élément de support pour supporter la traverse de siège (402) vers le haut est agencé dans la rainure de logement de batterie d'alimentation (202) ; et
une extrémité inférieure de l'élément de support est reliée à une paroi du fond (203) de la rainure de logement de batterie d'alimentation (202), et une extrémité supérieure de l'élément de support est reliée à la traverse de siège (402) à travers le couvercle (401).

2. Architecture de plateforme de soubassement intégrée du véhicule électrique CTB selon la revendication 1, dans laquelle
l'unité avant (1) comprend une traverse avant (101), deux longerons de compartiment moteur (103) et deux tourelles d'amortisseur avant (102), deux extrémités de la traverse avant sont respectivement reliées aux deux longerons de compartiment moteur, et les deux tourelles d'amortisseur avant sont reliées aux deux longerons de compartiment moteur respectivement.

3. Architecture de plateforme de soubassement intégrée du véhicule électrique CTB selon la revendication 2, dans laquelle
les sommets des deux tourelles d'amortisseur avant (102) sont tous deux pourvus d'un trou de montage d'amortisseur avant usiné.

4. Architecture de plateforme de soubassement intégrée du véhicule électrique CTB selon l'une quelconque des revendications 1 à 3, dans laquelle
l'unité arrière (3) comprend un plancher arrière (301), deux longerons arrière (303) et deux tourelles d'amortisseur arrière (302), les deux longerons arrière sont reliés au plancher arrière, et les deux tourelles d'amortisseur arrière sont respectivement reliées aux deux longerons arrière.

5. Architecture de plateforme de soubassement intégrée du véhicule électrique CTB selon l'une quelconque des revendications 1 à 4, dans laquelle
l'unité avant (1) est une pièce moulée sous pression en alliage d'aluminium qui est coulée d'un seul tenant, l'unité centrale (2) est une pièce moulée sous pression en alliage d'aluminium qui est coulée d'un seul tenant, et l'unité arrière (3) est une pièce moulée sous pression en alliage d'aluminium coulée d'un seul tenant.

6. Architecture de plateforme de soubassement intégrée du véhicule électrique CTB selon l'une quelconque des revendications 1 à 5, dans laquelle
l'unité centrale (2) comprend en outre deux traverses d'unité centrale, l'une des traverses d'unité centrale est reliée entre des extrémités avant des deux longerons de bas de caisse, et l'autre traverse d'unité centrale est reliée entre des extrémités arrière des deux longerons de bas de caisse.

7. Automobile, comprenant l'architecture de plateforme de soubassement intégrée de véhicule électrique CTB selon l'une quelconque des revendications 1 à 6.
